# EUROPEAN PATENT APPLICATION

(11) **EP 2 224 354 A1**
(43) Date of publication of application: **01.09.2010**
(21) Application number: 09154010.4
(22) Date of filing: 27.02.2009
(51) Int. Cl.: G06F 17/30

(54) **communications system providing notification effectiveness ranking for a notification display and related methods**

(71) Applicant: RESEARCH IN MOTION LIMITED, Waterloo, Ontario N2L 3W8 (CA)
(72) Inventor: Griffin, Jason T., Ontaria N2L 3W8 (CA); Reeve, Scott, Ontaria N2L 3W8 (CA)
(74) Representative: Phillips, Emily Elizabeth

(57) **Abstract**

A communications system may include at least one mobile wireless communications device including an input device and a processor cooperating therewith for receiving input data corresponding to an advertising display. The system may further include an advertising server for determining when the at least one mobile wireless communications device enters within a threshold exposure distance of the advertising display, and increasing an advertising effectiveness ranking for the advertising display based upon a determination that the mobile wireless communications device entered within the threshold exposure distance, and based upon the processor receiving the input data corresponding to the advertising display.

## Description

### Technical Field

The present disclosure relates to the field of communications systems, and, more particularly, to wireless electronic mail (email) communications systems and related methods.

### Background

Mobile communications systems continue to grow in popularity and have become an integral part of both personal and business communications, Mobile telephones allow users to place and receive voice calls most anywhere they travel. Moreover, as cellular telephone technology has increased, so too has the functionality of mobile devices and the different types of devices available to users. For example, many mobile devices now incorporate personal digital assistant (PDA) features such as calendars, address books, task lists, etc. Moreover, such multifunction devices may also allow users to wirelessly send and receive electronic mail (email) messages and access the Internet via a cellular network and/or a wireless local area network (WLAN), for example.

As a result, users continue to spend more time using their mobile devices during the course of a day performing information searches, reading emails, etc., as opposed to early cellular phones that were used only for phones calls. This has resulted in a significant interest from the advertising community in not only targeting advertisements to mobile devices, but also to using such devices to determine the effectiveness of advertisements to which a user is exposed.

One exemplary system for determining and measuring exposure to media content items is set forth in U.S. Patent Publication No. 2006/0059277. A mobile client device carried by a user digitally samples the audio environment of the user on a regular basis. These samples are transformed into a stream of data signatures and compared with reference media items to detect user exposure to the reference items. Purchase behavior following exposure to selected media content items can be detected and tracked to gauge effectiveness of media items such as advertisements.

Despite the potential advantages of such approaches, further functionality may be desirable for determining the effect of advertisements to which a user is exposed.

### Brief Description of the Drawings

FIG. 1 is a schematic block diagram of a communications system in accordance with one exemplary embodiment.

FIG. 2 is a schematic block diagram of an exemplary embodiment of the mobile wireless communications device of the system of FIG. 1.

FIG. 3 is a flow diagram illustrating communication method aspects for providing an advertising effectiveness ranking for an advertising display based upon mobile wireless communications device input data.

FIG. 4 is a schematic block diagram illustrating exemplary components of a mobile wireless communications device that may be used with the system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communications system is disclosed herein which may include a communications system including at least one mobile wireless communications device including an input device and a processor cooperating with the input device for receiving input data corresponding to an advertising display. The system may further include an advertising server for determining when the at least one mobile wireless communications device enters within a threshold exposure distance of the advertising display, and increasing an advertising effectiveness ranking for the advertising display based upon a determination that the at least one mobile wireless communications device entered within the threshold exposure distance, and based upon the processor receiving the input data corresponding to the advertising display.

In some embodiments the at least one mobile wireless communications device may further include a position determining device, and the processor may cooperate with the position determining device for providing position information to the advertising server. In one implementation, the input data may include at least one search term query corresponding to subject matter of the advertising display. Further examples are that the input data may include electronic mail (email) data corresponding to subject matter of the advertising display, or document processing data corresponding to subject matter of the advertising display, or both. In addition, the input device may include an image capture device, for example, and the input data may include image data captured within the threshold exposure distance of the advertising display.

In addition, the advertising server may increase the advertising effectiveness ranking for the advertising display further based upon a time when the input data was received. Also, the at least one mobile wireless communications device may further include a wireless transceiver cooperating with the processor for communicating with the advertising server via a wireless communications network. In one implementation, the advertising display may be a billboard. By way of example, the input device may include a keypad.

A related advertising server may be for use with at least one wireless communications device including an input device and a mobile processor cooperating therewith for receiving input data corresponding to an advertising display. The advertising server may include a memory and a server processor coupled to the memory for determining when the at least one mobile wireless communications device enters within a threshold exposure distance of the advertising display. The server processor may also be for increasing an advertising effectiveness ranking for the advertising display based upon a determination that the at least one mobile wireless communications device entered within the threshold exposure distance and that the mobile processor received the input data corresponding to the advertising display.

A related communications method may include using at least one mobile wireless communications device to receive input data corresponding to an advertising display, and determining when the at least one mobile wireless communications device enters within a threshold exposure distance of the advertising display. Furthermore, the method may further include, at an advertising server, increasing an advertising effectiveness ranking for the advertising display based upon a determination that the at least one mobile wireless communications device entered within the threshold exposure distance, and based upon receipt of the input data corresponding to the advertising display

A related computer-readable medium may have computer executable instructions for causing an advertising server to performs steps including determining when at least one mobile wireless communications device enters within a threshold exposure distance of an advertising display, where the at least one mobile wireless communications device includes an input device and a processor cooperating therewith for receiving input data corresponding to the advertising display. The method may further include increasing an advertising effectiveness ranking for the advertising display based upon a determination that the at least one mobile wireless communications device entered within the threshold exposure distance, and based upon receipt of the input data corresponding to the advertising display.

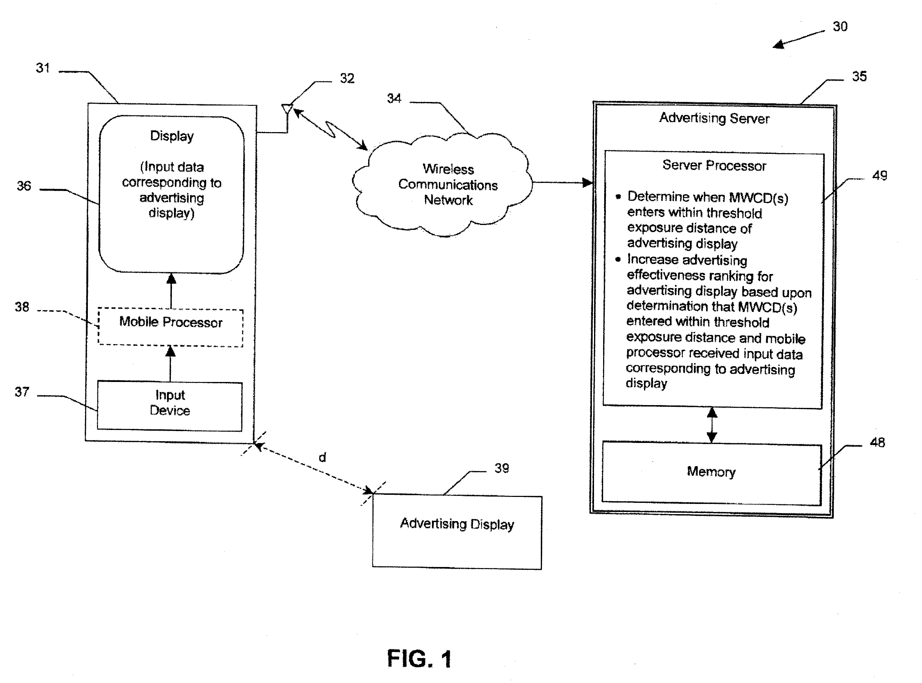

Turning now to FIGS. 1-3, a communications system **30** and associated communications method aspects are now described. The system **30** illustratively includes one or more mobile wireless communications devices **31** (MWCDs) and associated antenna(s) **32,** which may include internal antennas, external antennas, or both. Moreover, the system **30** further illustratively includes a wireless communications network **34,** and a notification (e.g., advertising) server **35** that communicates with the mobile device **31** via the wireless communications network. In some embodiments, the advertising server **35** may communicate with the wireless communications network **34** via a wide area network, such as the Internet, for example (not shown).

By way of example, the device **31** and wireless communications network **34** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Various types of mobile wireless communications devices **31** may be used, such as mobile phones, PDAs, laptop computers, wireless-enabled cameras, wireless-enabled media players, etc., for example.

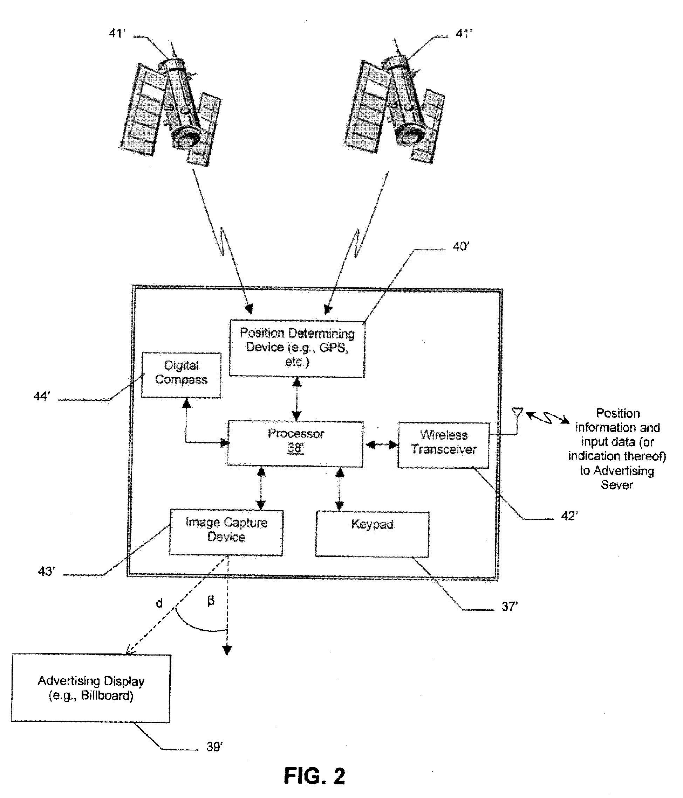

The mobile device **31** further illustratively includes an input device **37** and a mobile processor **38** that cooperates with the input device for receiving input data corresponding to a notification (e.g., advertising) display **39,** at Blocks **50-51.** Various types of input data corresponding to the advertising display may be used, as will be discussed further below. As seen in the example of FIG. 2, the advertising display **39'** is a billboard, but displays may take other forms in different embodiments, such as storefront advertising displays, etc. Moreover, the billboard or other display may be an electronic display with changing advertising text, images, animations, videos, etc., as well as a static display, as will be appreciated by those skilled in the art. It should be noted that, as used herein, "advertising" is not meant to imply that the subject matter of the display **31** relates to a particular product or service, but it may also more generally mean any indicator of a good or service or the provider thereof (e.g., the name on a storefront, etc.).

The advertising server **35** is for determining when the mobile device **31** enters within a threshold exposure distance **d** of the advertising display **39,** at Block **52**. By way of example, this may be done using a position determining device **40'** included in the mobile device **31**' that provides position information to the processor **38**', which may in turn be communicated to the advertising server **35.** By way of example, the position information may be communicated to the advertising server **35** on a schedule (e.g., once per minute, every few minutes, etc.), or upon the receipt of the designated or given type of input data.

In the embodiment illustrated in FIG. 2, the position determining device **40**' is a Global Positioning System (GPS) device that receives position location signals from a plurality of GPS satellites **41**', as will be appreciated by those skilled in the art. Other suitable types of position determining devices may also be used, such as the Russian Global Navigation Satellite System (GLONASS), the European Galileo positioning system, the COMPASS navigation system of China, TRNSS of India, or DORIS of France, for example, as well as ground-based position determining systems, as will be appreciated by those skilled in the art.

Moreover, a position determining device need not be included in the mobile device **31**' in all embodiments to determine the position thereof. For example, a proximity sensing device, which may be a Wi-Fi based system (e.g., IEEE 802.11 LAN), Bluetooth, etc., may be positioned at the location of the display **39**' to determine when a comparably enabled mobile device **31'** passes within the threshold distance **d,** as will also be appreciated by those skilled in the art. Furthermore, in some embodiments a microcell, picocell, femtocell, etc., may be located adjacent the display **39'** and be used a similar manner. It will therefore be appreciated that the threshold distance **d** may be different in different embodiments, and may take into account factors such as the range of the proximity sensing device (if used), the size or height of the display **39',** the size of the text or images included in the display, where the display is located (e.g., rural or urban, etc.), etc., as will be appreciated by those skilled in the art.

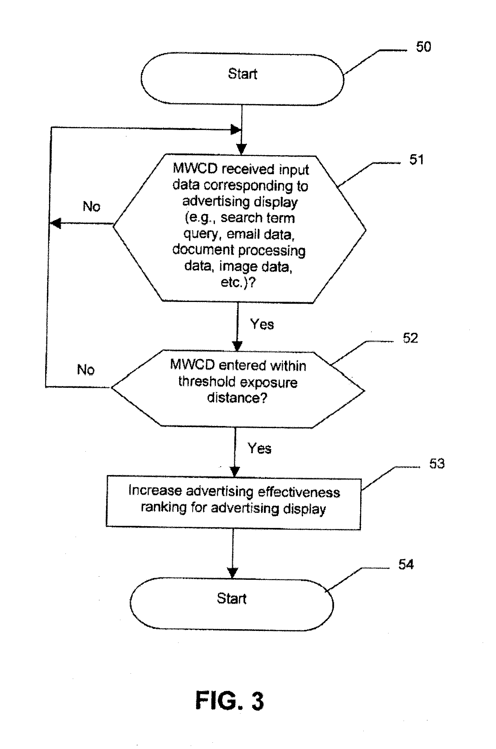

The advertising server **35** may advantageously include a memory **48** and server processor **49** cooperating therewith to increase an advertising effectiveness ranking for the advertising display **39** based upon a determination that the mobile device **31** has entered within the threshold exposure distance **d** and that the processor **38** has received the input data corresponding to the advertising display **39,** at Block **53,** thus concluding the method illustrated in FIG. 3 (Block **54).** That is, a ranking or score is associated with the advertising display **39** as an indicator of how successful or effective the display is in attracting attention and generating consumer interest in the products or services advertised thereon. By way of example, the ranking may simply be a count of the number of times mobile devices **31** have passed within the threshold distance **d** of the display **39** and provided the requisite input data. In some embodiments, the advertising effectiveness ranking may be based upon a standardized index, etc., to allow for comparisons betweens different displays.

It should be noted that other factors may be taken into account in the advertising effectiveness ranking, such as the size of the display **39,** type of display (e.g., static, dynamic), etc. This may advantageously provide further assistance in determining the relative effectiveness of different displays, such as providing a basis for comparing the effectiveness of smaller signs with larger signs, etc., as will be appreciated by those skilled in the art. Another factor that may be taken into account is the time when the input data is received. For example, the display **39** may be given an increased effectiveness rating for generating interest at a particular time of day, such a morning, lunchtime, after working hours, etc.

In accordance with one exemplary implementation, the input data may be a search query term or terms (e.g., an Internet or World Wide Web search query) entered by the user via the input device **39**' (e.g., a keypad, touch screen display, etc.) that corresponds to the subject matter of the advertising display. For example, if the advertising display **39**' is for a particular restaurant, if the user enters a search query term corresponding to the restaurant (e.g., the restaurant name, etc.), then the advertising server **35** would increase the advertising effectiveness ranking for the display. Additionally, in some embodiments the input data may simply be a Web address (e.g., a uniform resource locator (URL)) for the good or service or manufacturer or provider thereof.

It should be noted that the mobile device **31'** need not necessarily be within the threshold distance of the display **39'** when the input data (e.g., search term query) is received by the processor **38'** in all embodiments. That is, if the input data is provided within a certain period (e.g., a few minutes, hours, etc.) of time after the mobile device **31'** is beyond the threshold distance **d,** it may be reasonably concluded that the search query was prompted by the user viewing the display **39'.**

In accordance with another exemplary implementation, the input data may include email data corresponding to subject matter of the advertising display **39'.** That is, if a user enters text for an email message using the keypad **37'** and sends the email message while within the threshold exposure distance **d** (or within a certain amount of time thereafter), then the advertising server **35** or mobile device **31'** may check the message for keywords that relate to the subject matter of the advertising display. For example, if the advertising display **39'** is for a basketball shoe, keywords such as "basketball," "shce," the manufacturer's name, etc., may be used to trigger the advertising server **35** to increase the advertising effectiveness ranking for the display, as will be appreciated by those skilled in the art.

In a similar fashion, other types of input data entered by the user via the keypad **37** may also be checked for key terms or words that will trigger an increase of the advertising effectiveness ranking. For example, if a user types designated keywords corresponding to the advertising display **39'** into a document processing program, such as a notepad application, the mobile processor **38'** may detect the entry of such words and provide an indication to the advertising server **35'** thereof. In this regard, the mobile device **31'** may communicate with the advertising server **35** via a wireless transceiver **42'** to download a group of advertising words related to the subject matter of the advertising display **39'** when the device comes within the threshold distance **d** thereof. The mobile processor **38'** will thus have a basis for comparison to determine which document processing terms should cause it to notify the advertising server **35** that a "hit" or match has occurred, and accordingly that the advertising effectiveness should be increased.

In accordance with another advantageous aspect, the input device may include an image capture device **43',** such as a charge-coupled device (CCD) with associated camera lens, for example, for capturing digital images, as will be appreciated by those skilled in the art. In such embodiments, the input data may include image data captured within the threshold distance of the advertising display. That is, in some instances taking a picture within the threshold distance **d** of the advertising display **39'** may be considered as an event that indicates the effectiveness of the display, and the advertising effectiveness ranking may be increased accordingly.

In some embodiments, the mobile processor **38'** may simply communicate to the advertising server **35** the time or location (or both) when or where photos are taken using the mobile device **31',** and the advertising server may make the appropriate location or temporal calculations to determine whether any of the picture taking events should result in an increase of an advertising effectiveness ranking for the advertising display **39'** (or other advertising displays), as will be appreciated by those skilled in the art. Another approach is that the advertising server **35** may notify the processor **38'** of the location of advertising displays **39'** of interest within the vicinity of the mobile device, and if a picture is taken within a respective threshold distance of one of the display locations the processor **38'** may advantageously notify the advertising server **35** thereof, as will also be appreciated by the skilled artisan.

More particularly, in some embodiments the mobile device **31'** may advantageously include a digital compass **44'.** Among other functions, the incorporation of the digital compass **44'** within the mobile device **31'** may advantageously allow the processor **38'** to determine a direction or bearing β the mobile device (and, therefore, the camera lens) is pointing when a picture is taken. Thus, in such embodiments it may be determined with a significant degree of certainty when the user is taking a picture of the advertising display **39',** meaning that the display is of interest to the user and is drawing attention to itself. Again, such picture taking location and bearing information may be communicated to the advertising server **35** when the picture is taken, as well as after the fact in accordance with a schedule or when prompted. Also, the mobile processor **38'** may compare this information with previously received display location information from the advertising server **35** to make a determination that the advertising effectiveness ranking should be increased and communicate an indication thereof to the advertising server, as similarly discussed above.

Another exemplary input device that may be used in some embodiments is an accelerometer, which may provide input data relating to how fast a user moves through the area defined by the threshold exposure distance **d,** whether the user slows down or stops therein, etc. It should be noted that multiple different types of input data (e.g., search term queries, document processing data, mail data, image capture data, accelerometer data, etc.) may be used to provide an indication of advertising effectiveness in some embodiments. However, a single type of input data may also be used as well.

The advertising effectiveness ranking provided in accordance with the above-described approach may advantageously allow advertising display providers to charge higher fees to advertisers in some circumstances for certain displays, as advertisers may be more willing to pay the increased rates where they have an indication of how effective their particular advertising displays are, as will be appreciated by those skilled in the art. Moreover, the effectiveness ranking may be extrapolated from a subset of mobile devices that enter within the threshold exposure distance **d** of the advertising display **39.** For example, the system may be used with mobile devices from a particular manufacturer, with mobile devices on particular carrier networks, etc. However, knowing an estimated percentage of mobile phones in use from the particular manufacturer or carrier in a given region may therefore allow the effectiveness rankings to be extrapolated to the expected population of mobile device users (or, more generally, to the population at large with or without mobile devices) in the area, as will be appreciated by those skilled in the art.

The advertisement effectiveness rankings may advantageously be used to inform prospective advertisers where best to place their advertisements as well. More particularly, this may be done based upon an aggregation of the information collected from numerous mobile devices **31,** as will be appreciated by those skilled in the art. In some embodiments, users may receive a reduced wireless access charge, etc., in exchange for allowing their input data (e.g., search term queries, email messages, document processing data, image data, etc.) to be monitored for the purposes of determining advertisement effectiveness, as will also be appreciated by those skilled in the art.

A related computer-readable medium may have computer executable instructions (or modules) for causing an advertising server **35** to performs steps including determining when at least one mobile wireless communications device **31** enters within a threshold exposure distance **d** of an advertising display **39,** where the at least one mobile wireless communications device includes an input device **37** and a mobile processor **38** cooperating therewith for receiving input data corresponding to the advertising display. The steps may further include increasing an advertising effectiveness ranking for the advertising display **39** based upon a determination that the at least one mobile wireless communications device **31** entered within the threshold exposure distance **d,** and based upon receipt of the input data corresponding to the advertising display by the mobile processor **38.**

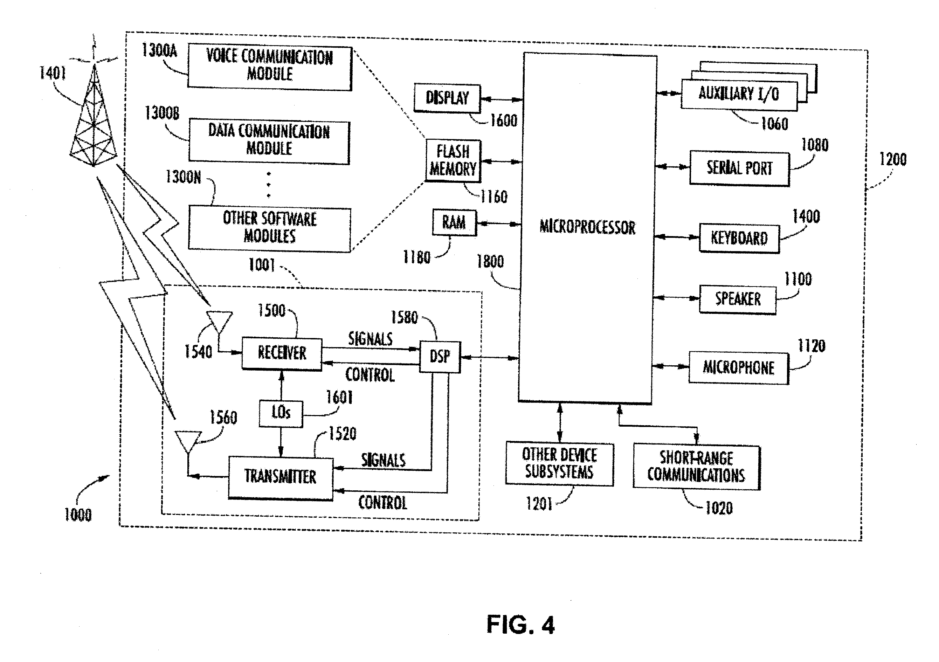

Exemplary components of a hand-held mobile wireless communications device **1000** that may be used in accordance the system **20** is further described in the example below with reference to FIG. 4. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600**. The processing device **1800** controls the operation of the display **1600,** as well as the overall operation of the mobile device **1000**, in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the Mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, COMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system (30) comprising:
at least one mobile wireless communications device (31) comprising
an input device (37), and
a processor (38) cooperating with said input device for receiving input data corresponding to an advertising display (39); and
a notification server (35) configured to determine when said at least one mobile wireless communications device enters within a threshold
exposure distance (d) of the advertising display, and increase an advertising effectiveness ranking for the advertising display based upon a determination that said at least one mobile wireless communications device entered within the threshold exposure distance and said processor receiving the input data corresponding to the notification display.

2. The communications system (30) of Claim 1 wherein said at least one mobile wireless communications device (31) further comprises a position determining device (40'); and wherein said processor (38) cooperates with said position determining device for providing position information to said notification server (35).

3. The communications system (30) of Claim 1 wherein the input data comprises at least one search term query corresponding to subject matter of the notification display (39).

4. The communications system (30) of Claim 1 wherein the input data comprises electronic mail (email) data corresponding to subject matter of the notification display (39).

5. The communications system (30) of Claim 1 wherein the input data comprises document processing data corresponding to subject matter of the notification display (39).

6. The communications system (30) of Claim 1 wherein said input device (37) comprises an image capture device; and wherein the input data comprises image data captured within the threshold exposure distance (d) of the notification display (39).

7. The communications system (30) of Claim 1 wherein said notification server (35) increases the advertising effectiveness ranking for the notification display (39) further based upon a time when the input data was received.

8. The communications system (30) of Claim 1 wherein said at least one mobile wireless communications device (31) further comprises a wireless transceiver cooperating with said processor (38) for communicating with said notification server (35) via a wireless communications network (34).

9. The communications system (30) of Claim 1 wherein the notification display (39) comprises a billboard.

10. The communications system (30) of Claim 1 wherein said input device (37) comprises a keypad (37').

11. A communications method comprising:
using at least one mobile wireless communications device (31) to receive input data corresponding to an notification display (39);
determining when the at least one mobile wireless communications device enters within a threshold exposure distance (d) of the notification display; and
at an notification server (35), increasing an advertising effectiveness ranking for the notification display based upon a determination that the at least one mobile wireless communications device entered within the threshold exposure distance and receipt of the input data corresponding to the notification display.

12. The method of Claim 11 wherein the input data comprises at least one search term query corresponding to subject matter of the notification display (39).

13. The method of Claim 11 wherein the input data comprises electronic mail (email) data corresponding to subject matter of the notification display (39).

14. The method of Claim 11 wherein the input data comprises image data captured within the threshold exposure distance (d) of the notification display (39).

15. The method of Claim 11 wherein increasing the advertising effectives ranking further comprises increasing the advertising effectiveness ranking for the notification display (39) further based upon a time when the input data was received.

## Amended claims

### Amended claims in accordance with Rule 137(2) EPC.

**1.** A communications system (30) comprising:
at least one mobile wireless communications device (31) comprising
an input device (37), and
a processor (38) cooperating with said input device for receiving input data corresponding to an advertising display (39); and
a notification server (35) configured to
determine when said at least one mobile wireless communications device enters within a threshold exposure distance (d) of the advertising display, and
increase an advertising effectiveness ranking for the advertising display based upon a determination that said at least one mobile wireless communications device entered within the threshold exposure distance and said processor received the input data corresponding to the advertising display.

**2.** The communications system (30) of Claim 1
wherein said at least one mobile wireless communications device (31) further comprises a position determining device (40'); and wherein said processor (38) cooperates with said position determining device for providing position information to said notification server (35).

**3.** The communications system (30) of Claim 1
wherein the input data comprises at least one search term query corresponding to subject matter of the notification display (39).

**4.** The communications system (30) of Claim 1
wherein the input data comprises electronic mail (email) data corresponding to subject matter of the notification display (39).

**5.** The communications system (30) of Claim 1
wherein the input data comprises document processing data corresponding to subject matter of the notification display (39).

**6.** The communications system (30) of Claim 1
wherein said input device (37) comprises an image capture device; and wherein the input data comprises image data captured within the threshold exposure distance (d) of the notification display (39).

**7.** The communications system (30) of Claim 1
wherein said notification server (35) increases the advertising effectiveness ranking for the notification display (39) further based upon a time when the input data was received.

**8.** The communications system (30) of Claim 1
wherein said at least one mobile wireless communications device (31) further comprises a wireless transceiver cooperating with said processor (38) for communicating with said notification server (35) via a wireless communications network (34).

**9.** The communications system (30) of Claim 1
wherein the notification display (39) comprises a billboard.

**10.** The communications system (30) of Claim 1
wherein said input device (37) comprises a keypad (37').

**11.** A communications method comprising:
using at least one mobile wireless communications device (31) to receive input data corresponding to an notification display (39);
determining when the at least one mobile wireless communications device enters within a threshold exposure distance (d) of the notification display; and
at an notification server (35), increasing an advertising effectiveness ranking for the notification display based upon a determination that the at least one mobile wireless communications device entered within the threshold exposure distance and received the input data corresponding to the notification display.

**12.** The method of Claim 11 wherein the input data comprises at least one search term query corresponding to subject matter of the notification display (39).

**13.** The method of Claim 11 wherein the input data comprises electronic mail (email) data corresponding to subject matter of the notification display (39).

**14.** The method of Claim 11 wherein the input data comprises image data captured within the threshold exposure distance (d) of the notification display (39).

**15.** The method of Claim 11 wherein increasing the advertising effectives ranking further comprises increasing the advertising effectiveness ranking for the notification display (39) further based upon a time when the input data was received.
